# EUROPEAN PATENT SPECIFICATION

(11) **EP 2 899 850 B1**
(45) Date of publication and mention of the grant of the patent: **06.11.2019**
(21) Application number: 14168239.3
(22) Date of filing: 14.05.2014
(51) Int. Cl.: H02K 1/20, H02K 7/18

(54) **Electric generator for a wind turbine with stator gaps varying in axial direction of the generator**
Elektrischer Generator für eine Windturbine mit in Axialrichtung unterschiedlichen Statorspalten
Générateur électrique pour une éolienne avec des espaces de stator variant dans le sens axial du générateur

(30) Priority: 23.01.2014 EP 14152301
(43) Date of publication of application: 29.07.2015
(73) Proprietor: Siemens Gamesa Renewable Energy A/S, 7330 Brande (DK)
(72) Inventor: Airoldi, Giovanni, 7330 Brande (DK); Madani, Nima, 7100 Vejle (DK); Tourde, Xavier, 7100 Vejle (DK)
(74) Representative: Aspacher, Karl-Georg

(56) References cited:
- JP-A- 2000 050 541
- JP-A- 2006 050 712
- JP-U- S61 192 658
- US-A- 5 633 543
- US-B1- 6 346 755

## Description

### Field of invention

The present invention relates to an electric generator for a wind turbine, comprising a stator, a rotor and a plurality of stator gaps between axially adjacent segments of said stator. The present invention also relates to an electric generator arrangement, comprising an electric generator of the kind above and at least one cooling fan, which in its active state causes an air flow through a rotor stator gap between said rotor and said stator and through said stator gaps.

### Art Background

Electric generators of the kind above, which may be embodied as direct drive generators, are generally known. Usually, such generators have a diameter in the range of 3 meters and more, operate at rotational speeds in the range of up to 16 rpm and produce electrical power in the range of several megawatts. To dissipate unwanted heat produced by the generator, cooling air can blown through the stator gaps.

Recent research activities have shown that the temperature of the stator varies in axial direction of the generator. In particular, the temperature at the drive end is higher than in other sections. Generally, higher temperature in the stator causes higher magnet temperature which in turn causes weaker magnetic characteristics. This means that for the same torque production a higher current is needed due to the higher magnet temperatures. However, higher currents result in higher DC winding losses which in turn negatively influences the Annual Energy Production (AEP).

It was also observed that high temperature causes flux loss during lifetime. Different magnet temperatures with respect to the axial extension of the generator lead to uneven flux loss after a couple of years of operation. The uneven magnetic characteristics in turn lead into unbalanced performance of the generator what goes along with increased vibration and fatigue. An example of an electric generator for a wind turbine is known e.g. from the document US 5 633 543.

### Summary of the Invention

These drawbacks may be overcome by the subject matter according to the independent claims. Advantageous embodiments of the present invention are described by the dependent claims.

According to a first aspect of the invention, there is provided an electric generator as disclosed in claim 1.

In other words, there is provided an electric generator as disclosed in the opening paragraph, wherein the geometry and/or size of the stator gaps between axially adjacent segments of said stator vary in axial direction.

This aspect of the invention is based on the idea that varying the geometry and/or size of the stator gaps according to cases a) and/or b) also varies the airflow through the stator gaps along the axial extension of the generator. By this measures the airflow of the cooling air may be increased in hotter sections in relation to cooler sections of the generator. In this way, the drawbacks mentioned above may be avoided. In particular, uneven flux loss and hence uneven magnetic characteristics going hand in hand with unbalanced performance of the generator and increased vibration and fatigue may be prevented or at least reduced.

According to the invention, in case a) an angle between a stator gap and said radial direction in a center region of the generator is smaller than an angle between a stator gap and said radial direction in an axial end region of the generator. In this way, the aerodynamic drag in an axial end region of the generator is smaller than the aerodynamic drag in a center region of the generator. Accordingly, more cooling air passes through a stator gap in said end region compared to the cooling air passing through a stator gap in said center region. Hence, heat dissipation is higher in the end regions compared to the heat dissipation in the center region. All in all, a balanced or even temperature profile over the axial extension of the generator may be obtained.

In this context it is beneficial, if the angle between a stator gap and said radial direction in the center region of the generator is smaller than the angle between a stator gap and said radial direction in the region of a drive end of the generator. Often, most heat is produced at the drive end of the generator. By the proposed measures, heat dissipation at the drive end is increased compared to heat dissipation in the center region, thus balancing/evening temperature profile over the axial extension of the generator.

It is also beneficial, if the angle between a stator gap and said radial direction in the center region of the generator is smaller than the angle between a stator gap and said radial direction at both axial ends of the generator. By these measures, the temperature profile may be balanced/evened in cases where an increased amount of heat is produced at both ends of the generator.

According to the invention, in case b) the width of a stator gap between axially adjacent segments in a center region of the generator is smaller than the width of a stator gap between axially adjacent segments in an axial end region of the generator. This is another way to vary the aerodynamic drag and thus heat dissipation over the axial extension of the generator. Again a balanced or even temperature profile over the axial extension of the generator may be obtained. The measures of case b) may be taken independent of the measures of case b) or together with them.

In the context above it is beneficial, if the width of a stator gap in the center region of the generator is smaller than said width of a stator gap in the region of a drive end of the generator. By these measures, the temperature profile may be balanced/evened in cases where an increased amount of heat is produced at the drive end of the generator.

In the context above it is also beneficial, if width of a stator gap in the center region of the generator is smaller than said width of a stator gap at both axial ends of the generator. By these measures, the temperature profile may be balanced/evened in cases where an increased amount of heat is produced at both ends of the generator.

According to a further aspect of the invention, there is provided an electric generator arrangement, comprising an electric generator of the kind above and at least one cooling fan, which in its active state causes an air flow through a rotor stator gap between said rotor and said stator and through said stator gaps. In this way an air flow for cooling the generator may be produced.

According to a further embodiment of the invention, the angle between the air flow in the rotor stator gap and the air flow in an inclined stator gap is > 90°. In this way the aerodynamic drag is comparably low.

According to yet another embodiment of the invention, the angle between the air flow in the rotor stator gap and the air flow in the stator gap is > 90° in the axial end region of the generator and ≤ 90° in the center region of the generator. In this way the aerodynamic drag is comparably low in the axial end region of the generator and comparably high in the center region of the generator.

It has to be noted that embodiments of the invention have been described with reference to different subject matters. However, a person skilled in the art will gather from the above and the following description that, unless other notified, in addition to any combination of features belonging to one type of subject matter also any combination between features relating to different subject matters.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic cross section of an exemplary electric generator arrangement with inclined stator gaps;
Figure 2 shows a further exemplary electric generator arrangement with inclined stator gaps at both axial ends;
Figure 3 shows a detail of an exemplary electric generator arrangement having stator gaps with different width and
Figure 4 shows an oblique view of the arrangement of the fans.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

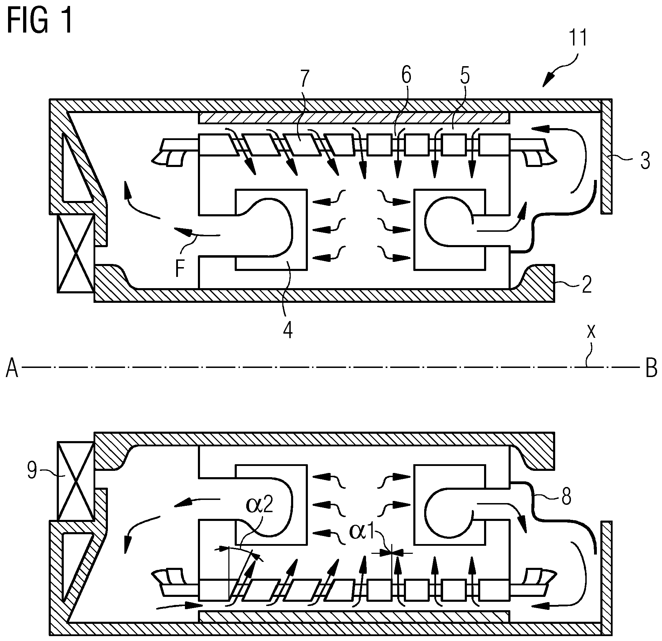

Fig. 1 shows a schematic cross section of an exemplary electric generator arrangement 11, which comprises a stator 2, a rotor 3 and a plurality of cooling fans 4. In their active state the cooling fans 4 cause the air flow F through a rotor stator gap 5 between said rotor 3 and said stator 2 and through stator gaps 6 between axially adjacent segments 7 of said stator 2. Moreover, Fig. 1 shows an axis x of the generator arrangement 11, a housing 8 and a bearing 9.

Several stator gaps 5 are inclined compared to a radial direction (perpendicular to axis x) of said generator arrangement 1 with respect to the shown axial longitudinal section. Furthermore, the inclinations between the stator gaps 6 and said radial direction of the generator arrangement 11 vary in axial direction.

Concretely, an angle α1 between a stator gap 6 and said radial direction in a center region of the generator arrangement 11 is smaller than an angle α2 between a stator gap 6 and said radial direction in an axial end region A of the generator arrangement 11 in this example. More concretely, the angle α1 between a stator gap 6 and said radial direction in the center region of the generator arrangement 11 is smaller than the angle α2 between a stator gap 6 and said radial direction in the region of a drive end A (here its left side) of the generator arrangement 11.

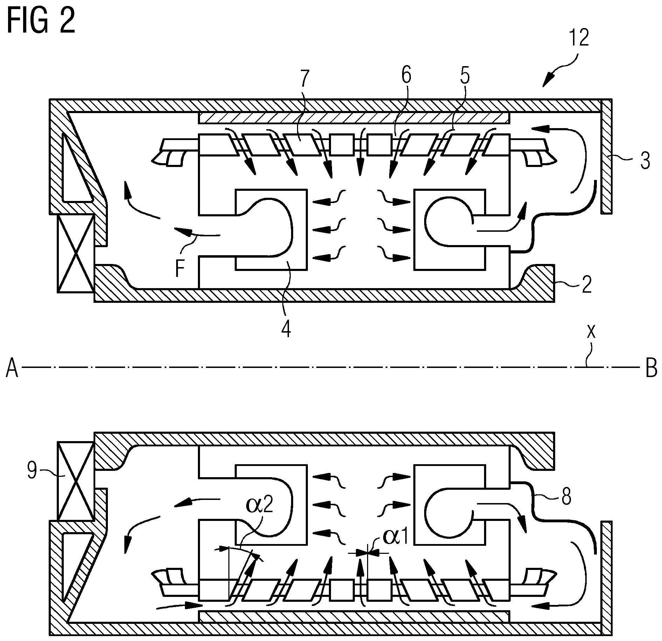

Fig. 2 shows a generator arrangement 12, which is quite similar to the generator arrangement 11 shown in Fig. 1. In contrast, the angle α1 between a stator gap 6 and said radial direction in the center region of the generator arrangement 12 is smaller than the angle α2 between a stator gap 6 and said radial direction at both axial ends A, B of the generator arrangement 12.

In Figs 1 and 2 the angle between the air flow F in the rotor stator gap 5 and the air flow F in the stator gap 6 is > 90° in the axial end region A, B of the generator arrangement 11, 12 and = 90° in the center region of the generator arrangement 11, 12.

However, it is also possible that the angle between the air flow F in the rotor stator gap 5 and the air flow F in the stator gap 6 is < 90° in the center region of the generator arrangement 11, 12 so as to further increase the aerodynamic drag. It is also possible, that the angle between the air flow F in the rotor stator gap 5 and the air flow F in an inclined stator gap 6 generally is > 90°. In this way the aerodynamic drag may be kept comparably low.

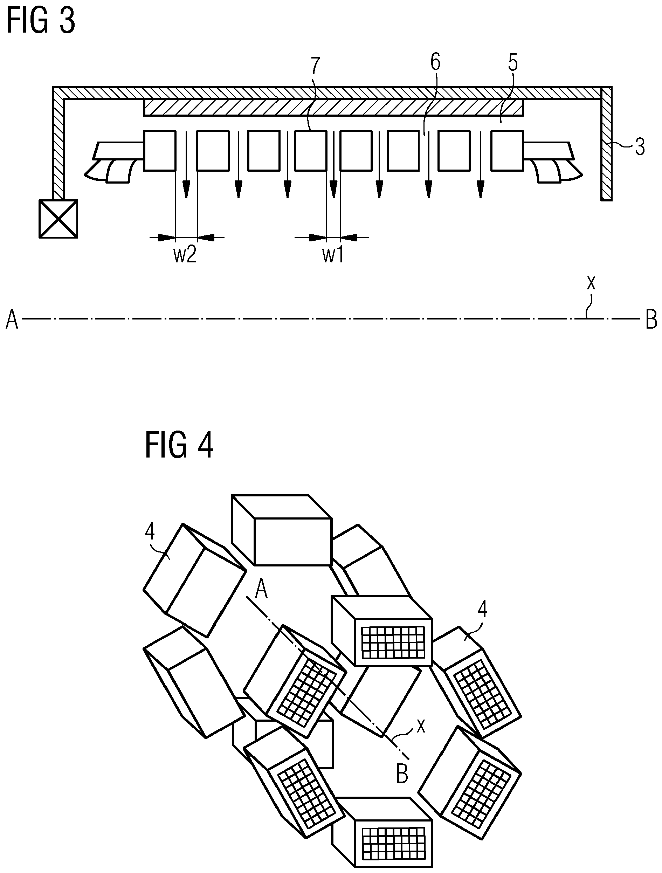

Fig. 3 shows a detail of a generator arrangement, wherein a width w1, w2 of the stator gaps 6 between axially adjacent segments 7 of said stator 2 vary in axial direction.

Concretely, the width w1 of a stator gap 6 between axially adjacent segments 7 in a center region of the generator arrangement is smaller than the width w2 of a stator gap 6 between axially adjacent segments 7 in an axial end region A, B of the generator arrangement. More concretely, the width w1 of a stator gap 6 in the center region of the generator arrangement is smaller than said width w2 of a stator gap 6 at both axial ends A, B of the generator arrangement.

However, it is also possible that the width w1 of a stator gap 6 in the center region of the generator arrangement is smaller than said width w2 of a stator gap 6 in the region of a drive end A (here its left side) of the generator arrangement.

By the measures presented in the Figs. 1 to 3 the airflow of the cooling air may be increased in hotter sections in relation to cooler sections of the generator arrangement 11, 12. In this way, uneven flux loss and hence uneven magnetic characteristics going hand in hand with unbalanced performance of the generator and increased vibration and fatigue may be prevented or at least reduced. Concretely, the aerodynamic drag is varied according to necessary heat dissipation in the different regions of the generator arrangement 11, 12 by varying the inclination and/or width w1, w2 of the stator gaps 6. In this way, in particular heat dissipation may be increased at the drive end A or at both ends A, B of the generator arrangement 11, 12 compared to its center region.

Fig. 4 shows an oblique view of the arrangement of the fans 4. Six fans 4 are arranged in the first axial end region A of the generator/generator arrangement 1, and six fans 4 are arranged in the second axial end region B of the generator/generator arrangement 1. In Fig. 4 also optional grids are shown at the inlet of the fans 4.

It should also be noted that any other number of fans 4 and any other arrangement of the same may be applicable as well. It is even possible to arrange the fans 4 outside of the generator. In both cases, the generator arrangement 11, 12 comprises the generator itself and the fans 4. If the fans 4 are arranged inside of the generator, the generator and the generator arrangement 1 is the same.

In the example shown in the Figures, cooling air circulates just inside of the generator/generator arrangement 11, 12. It is cooled down by means of air-liquid heat exchangers, in which heat is transferred from the cooling air to cooling liquid. This liquid is conveyed to the outside of the generator and to an external heat exchanger by means of pipes (not shown). In case of a wind turbine, this external heat exchanger may be arranged on the top of the nacelle. The wind goes through this external heat exchanger outside the nacelle and cools down the liquid.

In the example shown in the Figures, the fans 4 and heat exchangers associated with each fan 4 form structural units. However, fans 4 and heat exchangers can also be built as separate units. Moreover, the number of fans 4 and the number of heat exchangers needs not to be the same. There may also be less or more heat exchangers.

It should also be noted, that the invention is not limited to a circular air flow cooled by a liquid cooling. The air flow may also directed through the generator. Moreover it is noted that the invention may be applied generally to generators. Nevertheless it is beneficially applied to wind turbine applications.

Finally, it should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Electric generator for a wind turbine, comprising
- a stator (2),
- a rotor (3),
- a plurality of stator gaps (6) between axially adjacent segments (7) of said stator (2), wherein a width (w1, w2) of the stator gaps (6) between axially adjacent segments (7) of said stator (2) vary in axial direction, the width (w1) of a stator gap (6) between axially adjacent segments (7) in a center region of the generator being smaller than the width (w2) of a stator gap (6) between axially adjacent segments (7) in an axial end region (A, B) of the generator, **characterized in that** at least one stator gap (6) is inclined compared to a radial direction of said generator with respect to an axial longitudinal section and wherein said inclinations between the stator gaps (6) and said radial direction of the generator vary in axial direction, an angle (α1) between a stator gap (6) and said radial direction in a center region of the generator being smaller than an angle (α2) between a stator gap (6) and said radial direction in an axial end region (A, B) of the generator.

2. Electric generator as claimed in claim 1, wherein the angle (α1) between a stator gap (6) and said radial direction in the center region of the generator is smaller than the angle (α2) between a stator gap (6) and said radial direction in the region of a drive end (A) of the generator.

3. Electric generator as claimed in claim 1, wherein the angle (α1) between a stator gap (6) and said radial direction in the center region of the generator is smaller than the angle (α2) between a stator gap (6) and said radial direction at both axial ends (A, B) of the generator.

4. Electric generator as claimed in claim 1, wherein said width (w1) of a stator gap (6) in the center region of the generator is smaller than said width (w2) of a stator gap (6) in the region of a drive end (A) of the generator.

5. Electric generator as claimed in claim 1, wherein said width (w1) of a stator gap (6) in the center region of the generator is smaller than said width (w2) of a stator gap (6) at both axial ends (A, B) of the generator.

6. Electric generator arrangement (11, 12), comprising an electric generator as claimed in any one of the claims 1 to 6 and at least one cooling fan (4), which in its active state causes an air flow (F) through a rotor stator gap (5) between said rotor (3) and said stator (2) and through said stator gaps (6).

7. Electric generator arrangement (11, 12) as claimed in claim 6, wherein the angle between the air flow in the rotor stator gap (5) and the air flow in an inclined stator gap (6) is > 90°.

8. Electric generator arrangement (11, 12) as claimed in claim 6, wherein the angle between the air flow in the rotor stator gap (5) and the air flow in the stator gap (6) is > 90° in the axial end region of the generator and ≤ 90° in the center region of the generator.

## Patentansprüche

1. Elektrischer Generator für eine Windturbine, umfassend:
- einen Stator (2),
- einen Rotor (3),
- eine Vielzahl von Statorspalten (6) zwischen axial benachbarten Segmenten (7) des Stators (2), wobei eine Breite (w1, w2) der Statorspalten (6) zwischen axial benachbarten Segmenten (7) des Stators (2) in axialer Richtung variiert, wobei die Breite (w1) eines Statorspaltes (6) zwischen axial benachbarten Segmenten (7) in einem mittleren Bereich des Generators kleiner ist als die Breite (w2) eines Statorspaltes (6) zwischen axial benachbarten Segmenten (7) in einem axialen Endbereich (A, B) des Generators, **dadurch gekennzeichnet, dass** mindestens ein Statorspalt (6) verglichen mit einer radialen Richtung des Generators in Bezug auf einen axialen Längsschnitt geneigt ist, und wobei die Neigungen zwischen den Statorspalten (6) und der radialen Richtung des Generators in axialer Richtung variieren, wobei ein Winkel (α1) zwischen einem Statorspalt (6) und der radialen Richtung in einem mittleren Bereich des Generators kleiner ist als ein Winkel (α2) zwischen einem Statorspalt (6) und der radialen Richtung in einem axialen Endbereich (A, B) des Generators.

2. Elektrischer Generator nach Anspruch 1, wobei der Winkel (α1) zwischen einem Statorspalt (6) und der radialen Richtung im mittleren Bereich des Generators kleiner ist als der Winkel (α2) zwischen einem Statorspalt (6) und der radialen Richtung im Bereich eines Antriebsendes (A) des Generators.

3. Elektrischer Generator nach Anspruch 1, wobei der Winkel (α1) zwischen einem Statorspalt (6) und der radialen Richtung im mittleren Bereich des Generators kleiner ist als der Winkel (α2) zwischen einem Statorspalt (6) und der radialen Richtung an beiden axialen Enden (A, B) des Generators.

4. Elektrischer Generator nach Anspruch 1, wobei die Breite (w1) eines Statorspaltes (6) im mittleren Bereich des Generators kleiner ist als die Breite (w2) eines Statorspaltes (6) im Bereich eines Antriebsendes (A) des Generators.

5. Elektrischer Generator nach Anspruch 1, wobei die Breite (w1) eines Statorspaltes (6) im mittleren Bereich des Generators kleiner ist als die Breite (w2) eines Statorspaltes (6) an beiden axialen Enden (A, B) des Generators.

6. Elektrische Generatoranordnung (11, 12) umfassend: einen elektrischen Generator nach einem der Ansprüche 1 bis 6 und mindestens ein Kühlgebläse (4), das in seinem aktiven Zustand einen Luftstrom (F) durch einen Rotor-Stator-Spalt (5) zwischen dem Rotor (3) und dem Stator (2) und durch die Statorspalte (6) bewirkt.

7. Elektrische Generatoranordnung (11, 12) nach Anspruch 6, wobei der Winkel zwischen dem Luftstrom in dem Rotor-Stator-Spalt (5) und dem Luftstrom in einem geneigten Statorspalt (6) > 90° ist.

8. Elektrische Generatoranordnung (11, 12) nach Anspruch 6, wobei der Winkel zwischen dem Luftstrom in dem Rotor-Stator-Spalt (5) und dem Luftstrom in dem Statorspalt (6) im axialen Endbereich des Generator > 90° ist und im mittleren Bereich des Generators ≤ 90° ist.

## Revendications

1. Générateur électrique pour une éolienne, comprenant
- un stator (2),
- un rotor (3),
- une pluralité d'espaces de stator (6) entre des segments axialement adjacents (7) dudit stator (2), dans lequel une largeur (w1, w2) des espaces de stator (6) entre des segments axialement adjacents (7) dudit stator (2) varie dans le sens axial, la largeur (w1) d'un espace de stator (6) entre des segments axialement adjacents (7) dans une région centrale du générateur étant inférieure à la largeur (w2) d'un espace de stator (6) entre des segments axialement adjacents (7) dans une région d'extrémité axiale (A, B) du générateur, **caractérisé en ce qu'**au moins un espace de stator (6) est incliné comparativement à un sens radial dudit générateur par rapport à une section longitudinale axiale et dans lequel lesdites inclinaisons entre les espaces de stator (6) et ledit sens radial du générateur varient dans le sens axial, un angle (α1) entre un espace de stator (6) et ledit sens radial dans une région centrale du générateur étant inférieur à un angle (α2) entre un espace de stator (6) et ledit sens radial dans une région d'extrémité axiale (A, B) du générateur.

2. Générateur électrique selon la revendication 1, dans lequel l'angle (α1) entre un espace de stator (6) et ledit sens radial dans la région centrale du générateur est inférieur à l'angle (α2) entre un espace de stator (6) et ledit sens radial dans la région d'une extrémité d'entraînement (A) du générateur.

3. Générateur électrique selon la revendication 1, dans lequel l'angle (α1) entre un espace de stator (6) et ledit sens radial dans la région centrale du générateur est inférieur à l'angle (α2) entre un espace de stator (6) et ledit sens radial aux deux extrémités axiales (A, B) du générateur.

4. Générateur électrique selon la revendication 1, dans lequel ladite largeur (w1) d'un espace de stator (6) dans la région centrale du générateur est inférieure à ladite largeur (w2) d'un espace de stator (6) dans la région d'une extrémité d'entraînement (A) du générateur.

5. Générateur électrique selon la revendication 1, dans lequel ladite largeur (w1) d'un espace de stator (6) dans la région centrale du générateur est inférieure à ladite largeur (w2) d'un espace de stator (6) aux deux extrémités axiales (A, B) du générateur.

6. Agencement de générateur électrique (11, 12), comprenant un générateur électrique selon l'une quelconque des revendications 1 à 6 et au moins un ventilateur de refroidissement (4), qui dans son état actif provoque un écoulement d'air (F) à travers un espace rotor-stator (5) entre ledit rotor (3) et ledit stator (2) et à travers lesdits espaces de stator (6).

7. Agencement de générateur électrique (11, 12) selon la revendication 6, dans lequel l'angle entre l'écoulement d'air dans l'espace rotor-stator (5) et l'écoulement d'air dans un espace de stator incliné (6) est > 90°.

8. Agencement de générateur électrique (11, 12) selon la revendication 6, dans lequel l'angle entre l'écoulement d'air dans l'espace rotor-stator (5) et l'écoulement d'air dans l'espace de stator (6) est > 90° dans la région d'extrémité axiale du générateur et ≤ 90° dans la région centrale du générateur.
